# EUROPEAN PATENT APPLICATION

(11) **EP 3 848 149 A1**
(43) Date of publication of application: **14.07.2021**
(21) Application number: 20020203.4
(22) Date of filing: 30.04.2020
(51) Int. Cl.: B23K 35/26, B23K 35/36, B23K 35/362, B23K 1/012, C22C 13/00, B23K 35/38

(54) **SOLDER PASTE COMPOSITION AND SOLDERING METHOD USING THE SAME**

(30) Priority: 09.01.2020 TW 109100722
(71) Applicant: 3S Silicon Tech, Inc., Sinfong Township, Hsinchu County (TW)
(72) Inventor: YEH, Kuo-Liang, Hsinchu County, Taiwan (TW); CHEN, Yu-Tao, Hsinchu County, Taiwan (TW); HUANG, Wen-Ting, Hsinchu County, Taiwan (TW); HUANG, Cheng-Shang, Hsinchu County, Taiwan (TW)
(74) Representative: Ivanov, Ivan Nikolov

(57) **Abstract**

Provided are a solder paste composition and a soldering method using the same. The solder paste composition comprises a metal powder in an amount of 100 parts by weight and an organic mixture in an amount from 3 to 18 parts by weight; wherein the organic mixture comprises a solvent, a thixotropic agent and an organic acid; wherein the organic acid has a boiling point lower than a melting point of the metal powder. The soldering method using the solder paste composition comprises the steps as follows: providing the soldering paste composition between a substrate and a soldering target to form a complex structure; placing the complex structure in a chamber and introducing an acid gas to the chamber; and melting the metal powder of the soldering paste composition to solder the soldering target to the substrate.

## Description

### 1. Field of the Invention

The present invention relates to a solder paste composition, more particular to a solder paste composition applied to a manufacturing process for printed circuit boards and a soldering method using said solder paste composition.

### 2. Description of the Prior Arts

In recent years, in order to meet consumer demands for light, thin, small and high-function electronic devices, printed circuit boards (PCBs) implemented in the electronic devices are accordingly required to reduce their size and thickness. Therefore, how to improve bonding strength between the solder paste and the electronic components on the PCB has become one of the focuses of research and development since the foresaid development can reduce the contact area therebetween and achieve the fine pitch of the electronic components.

Basically, to solder two metals, as long as one of the two metals is heated to a temperature not lower than its melting point to form a liquid state, the surface of the other metal can be wetted and then the two metals can be soldered together. However, due to presence of oxygen in the air, most metals will react with the oxygen to form a metal oxide film. As a result, an interface between the two metals will only be bonded by a very weak Van der Waals force rather than a strong metal bond, causing false soldering.

To remove the metal oxide film, conventionally, a solder paste composition needs to comprise rosin and an active agent containing a quaternary ammonium halide salt. Rosin contains abietic acid, which is low corrosive at low temperatures but high corrosive at high temperatures. Besides, a carboxyl group (-COOH) of the abietic acid may react with the quaternary ammonium halide salt to generate a highly corrosive hydrogen halide such as hydrogen chloride or hydrogen bromide to easily erode and remove the metal oxide film. However, a by-product metal halide salt will subsequently react with the abietic acid to generate flux residues such as metal carboxylates, so that the hydrogen halide can be regenerated. The process of removing metal oxides is accompanied by a generation of water vapor. When the water vapor is enclosed in the solder joint, voids (empty gaps) will occur. Besides, if the flux residues such as the metal carboxylates or other residual organics generated from the rosin and the quaternary ammonium halide salts are not excluded from the solder joint, some problems will happen such as occurrence of voids, high interface resistances, low thermal conductivity, corroded solder joints, low soldering strength, low component reliability and short component life.

To overcome said problems, there are some studies that have proposed to reduce the content of the rosin and active agent in the solder paste composition or even without adding the aforementioned ingredients. For example, International Patent Application WO 2015/146999 A1 discloses a coated solder material, which is formed by coating a carbide layer on the surface of the pre-cleaned metal powders to prevent surface oxidation of the metal powders. As a result, no rosin is needed to add into a solder paste composition but a good solder bonding is still maintained. However, since the solder material needs a more complex manufacturing process including a specific pre-treatment, the cost increases highly, which is not conducive to mass production. In addition, Japan Patent No. 6281157 discloses a solder paste composition free of reducing agents and activators; in other words, the solder paste composition only contains metal powders, a specific thixotropic agent and a solvent. In order to remove the metal oxide film on the metal powders, the solder paste composition is limited to be used with a reducing gas together during a soldering process. However, when the foresaid solder paste composition is applied to a soldering process for a large-scale wafer, the resulting soldering boding strength of the center of the solder joint will become poor. The reason may be that said solder paste composition is free of activators so that the metal powders do not melt thoroughly because the metal oxide film at the outermost portion of the solder joint has been reduced to start melting, but the metal oxide film in the center of the solder joint has not been reduced because the reducing gas is not easy to penetrate into the center. Thus, the resulting solder product will have lower reliability. Moreover, if the reducing gas decomposes to produce water vapor, some voids still exist in the solder joint.

To overcome the shortcomings, an objective of the present invention is to provide a solder paste composition. The solder paste composition can meet the manufacturing cost-effectiveness and further have a potential for commercial implementation.

Another objective of the present invention is to provide a solder paste composition to reduce occurrence of voids in the solder joint and also can remove the metal oxides in the center of the solder joint, thereby obtaining a good soldering strength of the solder joint.

In order to achieve the aforementioned objective, the present invention provides a solder paste composition comprising a metal powder and an organic mixture. The metal powder is in an amount of 100 parts by weight and the organic mixture is in an amount from 3 parts by weight to 18 parts by weight; wherein the organic mixture comprises a solvent, a thixotropic agent and an organic acid; wherein the organic acid has a boiling point lower than a melting point of the metal powder.

By mixing the organic acid having a specific boiling point evenly with the metal powder in the solder paste composition at room temperature, the organic acid can completely penetrate all parts of the solder joint of any size to fully destroy the metal oxide film on the surface of the metal powder, thereby avoiding an uneven soldering strength. Moreover, the solder paste composition of the present invention limits the boiling point of the organic acid to be lower than the melting point of the metal powder and does not comprise the rosin having a boiling point higher than 300°C and a quaternary ammonium halide salt, so after a soldering process using said solder paste composition, the organic acid can be completely vaporized without remaining in the solder joint to corrode the solder joint, and the resulting solder porosity also can be reduced.

Preferably, the soldering paste composition may comprise the metal powder in an amount of 100 parts by weight and the organic mixture in an amount from 6 parts by weight to 15 parts by weight.

In accordance with the present invention, in the organic mixture, provided that the solvent is in an amount of 100 parts by weight, the organic acid is in an amount from 0.005 parts by weight to 3 parts by weight. Preferably, the organic acid is in an amount from 0.01 parts by weight to 3 parts by weight.

In accordance with the present invention, based on a total weight of the soldering paste composition, the organic acid is in an amount from 0.5 ppm to 4500 ppm. Preferably, the organic acid is in an amount from 5 ppm to 2500 ppm based on the total weight of the soldering paste composition. The ppm is defined as parts-per-million by weight.

In accordance with the present invention, as long as the boiling point of the organic acid is lower than the melting point of the metal powder, the beneficial effects of the present invention can be achieved. Preferably, the organic acid has the boiling point ranging from 95°C to 180°C, but it is not limited thereto.

In some embodiment, the organic acid has an acid dissociation constant (*i.e.* pKa value) ranging from 1.0 to 6.5. Preferably, the organic acid has the pKa value ranging from 3.0 to 5.0. More preferably, the organic acid has the pKa value ranging from 4.0 to 5.0.

Specifically, the organic acid may comprise a monoacid (*i.e.* the compound has only one carboxyl group, C(=O)OH), a dibasic acid (*i.e.* the compound has two carboxyl groups), or a tribasic acid (*i.e.* the compound has three carboxyl groups), but it is not limited thereto. When the organic acid has two or more carboxyl groups, the pKa value of the at least one carboxyl group will be in the aforesaid range. For example, the monoacid may be a formic acid, an acetic acid, a propanoic acid, a butyric acid or a hexanoic acid, but it is not limited thereto. The dibasic acid may be oxalic acid or (E)-butenedioic acid, but it is not limited thereto. The tribasic acid may be citric acid, but it is not limited thereto.

In accordance with the present invention, there are no specific limitations to the metal powder. As long as the melting point of the metal powder is lower than that of the workpieces to be connected (*e.g.* a copper substrate and a wafer (*i.e.* soldering target)), the metal powder can be used in the present invention. Preferably, the metal powder may comprise tin (Sn), silver (Ag), copper (Cu), lead (Pb), Bismuth (Bi) or nickel (Ni), an alloy containing any of these metal elements or any combination thereof. In some embodiment, the metal powder may comprise tin, and a content of the tin ranges from 4.5 wt% to 96 wt% based on a total weight of the metal powder. For example, the metal powder may be a lead-containing alloy such as a lead-tin alloy, or a lead-free alloy such as a tin-silver-copper alloy, but it is not limited thereto. The lead-free alloy means containing no lead or containing lead in such an amount of 1000 ppm or less.

In accordance with the present invention, as long as the melting point of the metal powder is higher than the boiling point of the organic acid, the beneficial effects of the present invention can be achieved. Preferably, the metal powder has the melting point ranging from 190°C to 300°C, but it is not limited thereto.

In this specification, said "average particle size" refers to the corresponding particle size value when the cumulative percentage of particle size distribution of a same kind of particles reaches 50%, also called D50. Specifically, the average particle size and the shapes of the metal powder are without any specific limitation. Preferably, the average particle size of the metal powder ranges from 5 µm to 75 µm. More preferably, the average particle size of the metal powder ranges from 25 µm to 45 µm.

In accordance with the present invention, there are no specific limitations to the solvent. Preferably, the solvent will not decompose at a high temperature and will not react with the organic acid. For example, the solvent may be a solvent at neutral pH such as an alcohol solvent, an ether solvent or a glycol ether solvent. In some embodiment, the solvent has a boiling point ranging from 150°C to 330°C, but it is not limited thereto. If the solvent is to be evaporated during the soldering process, the obtained soldered product does not need an additional cleaning step. Preferably, the solvent has the boiling point lower than the melting point of the metal powder; for example, the solvent has the boiling point ranging from 150°C to 260°C, but it is not limited thereto. For example, the solvent may be the glycol ether solvent such as diethylene glycol monomethyl ether, diethylene glycol monobutyl ether, diethylene glycol monohexyl ether, triethylene glycol monohexyl ether or dipropylene glycol monomethyl ether; the solvent may be the alcohol solvent such as 2-ethyl-1,3-hexanediol.

In accordance with the present invention, there are no specific limitations to the thixotropic agent. The thixotropic agent may comprise, but is not limited to, an amide-based thixotropic agent, a hydrogenated castor oil-based thixotropic agent, a castor oil-based thixotropic agent or a sorbitol-based thixotropic agent. Preferably, provided that the solvent is in an amount of 100 parts by weight, the thixotropic agent is in an amount from 0.5 parts by weight to 5 parts by weight. For example, the amide-based thixotropic agent may comprise a polyamide, stearamide, N-[(octadecanoylamino)methyl]octadecanamide, a hydroxymethyl-based amide such as a N-(hydroxymethyl)octadecanamide or N-butylurea, but it is not limited thereto. The hydrogenated castor oil-based thixotropic agent may comprise a hydrogenated castor oil. The castor oil-based thixotropic agent may comprise a castor oil. The sorbitol-based thixotropic agent may comprise sorbitol, 1,3:2,4-di-*p*-methylbenzylidene sorbitol or tribenzylidene sorbitol, but it is not limited thereto.

The present invention further provides a soldering method. The soldering method comprises steps as follows: a provision step of providing the aforesaid soldering paste composition between a substrate and a soldering target to form a complex structure; placing the complex structure in a chamber and introducing an acid gas to the chamber; and melting the metal powder of the soldering paste composition to solder the soldering target to the substrate.

Since the soldering method of the present invention uses the solder paste composition of the present invention to replace a conventional solder paste composition containing the rosin and comprises a step of introducing the acid gas, it can greatly reduce the flux residue generated after the soldering process, thereby improving the corrosion of the solder joint due to the remaining residue from the acidic substances. Moreover, a cleaning step after the soldering process can be omitted so as to simplify the overall manufacturing process, and then a reduction of waste water generated from the cleaning step can be achieved. That is, the soldering method can meet environmental requirements and reduce the cost of manufacturing printed circuit boards.

Preferably, a pressure of the acid gas in the chamber ranges from 700 Pa to 80,000 Pa. More preferably, the pressure of the acid gas in the chamber ranges from 1,300 Pa to 20,000 Pa.

In accordance with the present invention, the acid gas may be an organic acid gas or an inorganic acid gas. In particular, the organic acid gas may comprise a gaseous formic acid, a gaseous acetic acid, a gaseous propanoic acid or a gaseous butyric acid, but it is not limited thereto. The inorganic acid gas may comprise hydrogen chloride (HCl) or hydrogen bromide (HBr), but it is not limited thereto. Preferably, the acid gas may comprise a gaseous acetic acid, a gaseous propanoic acid, a gaseous butyric acid or hydrogen chloride.

Preferably, the soldering method further comprises a preliminary heating step after the provision step, and a temperature of the preliminary heating step is lower than the melting point of the metal powder. Preferably, the temperature of the preliminary heating step ranges from 100°C to 290°C.

In order to heat the solder paste composition more uniformly and remove the solvent in the solder paste composition, the preliminary heating step may comprise a multi-stage heating step. For example, the preliminary heating step may be a two-stage heating step, a three-stage heating step, a four-stage heating step, a five-stage heating step or a six-stage heating step, but it is not limited thereto. From the second stage on, a temperature of each stage is higher than the temperature of the preceding stage. For example, a temperature of the second stage is higher than a temperature of the first stage, and a temperature of the third stage is higher than the temperature of the second stage.

In accordance with the present invention, the step of placing the complex structure in the chamber and introducing the acid gas to the chamber hereinafter may be referred to as a step of introducing the acid gas. In some embodiment, the preliminary heating step may be performed before the step of introducing the acid gas. In another embodiment, the preliminary heating step may be performed simultaneously with the step of introducing the acid gas. For example, when the preliminary heating step is the four-stage heating step, the complex structure may be transported to the chamber having the acid gas after completing the whole four-stage heating step. When the preliminary heating step is the five-stage heating step, after completing the fourth-stage heating of the preliminary heating step, the complex structure may be transported to the chamber having the acid gas and undergo the fifth-stage heating simultaneously. When the preliminary heating step is the six-stage heating step, after completing the fourth-stage heating of the preliminary heating step, the complex structure may be transported to the chamber having the acid gas and undergo the fifth-stage heating simultaneously and then the sixth-stage heating of the preliminary heating step is followed by the fifth-stage heating.

In accordance with the present invention, the step of melting the metal powder of the soldering paste composition hereinafter may be referred to as a melting step. In some embodiment, the complex structure is first placed in the chamber having the acid gas, and then the melting step is performed. For example, the complex structure is first placed in the chamber having the acid gas and undergoes the preliminary heating step, and then the melting step is performed. In the melting step, a temperature of the melting step is not lower than the melting point of the metal powder of the solder paste composition since the metal powder should melt.

In another embodiment, the complex structure may be placed in the chamber having the acid gas and undergo the melting step simultaneously. Therefore, a temperature of the chamber having the acid gas is higher than the melting point of the metal powder of the solder paste composition. For example, the temperature of the chamber having the acid gas ranges from 200°C to 380°C.

In accordance with the present invention, the complex structure may be placed in the chamber having the acid gas one or more times. In order to make the acid gas react more completely with the solder paste composition, preferably, the complex structure can be placed in the chamber having the acid gas multiple times in phases; that is, the step of introducing the acid gas may be performed multiple times. For example, the soldering method may comprise two times of the step of placing the complex structure in a chamber and introducing an acid gas to the chamber; that is, a first step of introducing the acid gas and a second step of introducing the acid gas. The first and second steps of introducing the acid gas can be performed in successive order. Or any other step may be performed between the first and second steps of introducing the acid gas; in other words, the first and second steps of introducing the acid gas are separated. In some embodiment, the first and second steps of introducing the acid gas may be performed together with the preliminary heating step. In another embodiment, the first and second steps of introducing the acid gas may be performed together with the melting step. In another embodiment, the first step of introducing the acid gas may be performed together with the preliminary heating step and the second step of introducing the acid gas may be performed together with the melting step.

In the case that the step of introducing the acid gas is performed together with the preliminary heating step, the temperature of the chamber having the acid gas is lower than the melting point of the metal powder, so the metal powder will not be in a molten state in said chamber having the acid gas.

In the case that the step of introducing the acid gas is performed together with the melting step, the temperature of the chamber having the acid gas is not lower than the melting point of the metal powder, so the metal powder will start to melt and to liquefy in said chamber having the acid gas. However, because the melting point of the metal oxide on the surface of the metal powder is often higher than 1000°C, the interior of the metal powder is first liquefied but the surface remains in a solid state. After the acid gas and the organic acid in the solder paste composition destroy the metal oxide on the surface of the metal powder, the metal powder will be in a molten state.

In accordance with the present invention, after completion of the melting step, the soldering method further comprises a cooling step so as to obtain the soldered product.

### IN THE DRAWINGS:

Fig. 1 is an image of the soldered product P1 taken by an optical microscope.
Fig. 2 is an image of the soldered product P2 taken by an optical microscope.
Fig. 3 is an image of the soldered product CP2 taken by an optical microscope.
Fig. 4 is an image of the soldered product CP4 taken by an optical microscope.

Hereinafter, one skilled in the arts can easily realize the advantages and effects of the solder paste compositions and the soldering method containing the same in accordance with the present invention from the following examples. It should be understood that the descriptions proposed herein are just preferable examples only for the purpose of illustrations, not intended to limit the scope of the invention.

### Raw materials

1. Solvent A: diethylene glycol monohexyl ether; boiling point: 258°C;
2. Solvent B: 2-ethyl-1,3-hexanediol; boiling point: 241°C to 249°C;
3. Solvent C: diethylene glycol monobutyl ether; boiling point: 171°C;
4. Solvent D: diethylene glycol monomethyl ether; boiling point: 193°C;
5. Solvent E: triethylene glycol monohexyl ether; boiling point: 321.2°C;
6. Solvent F: dipropylene glycol monomethyl ether; boiling point: 190°C;
7. Organic acid I: formic acid; pKa: 3.75;
8. Organic acid II: acetic acid; pKa: 4.75;
9. Organic acid III: propanoic acid; pKa: 4.86;
10. Organic acid IV: butyric acid; pKa: 4.82;
11. Organic acid V: oxalic acid; pKa₁: 1.38, pKa₁: 4.28;
12. Thixotropic agent a: an amide-based thixotropic agent, N-[2-[(2-Hydroxyethyl)amino]ethyl]stearamide;
13. Thixotropic agent b: an amide-based thixotropic agent, n,n'-methylenebisoctadecanamide;
14. Thixotropic agent c: a hydrogenated castor oil-based thixotropic agent; the product model: Crayvallac MT;
15. Thixotropic agent d: a castor oil-based thixotropic agent; the product model: Crayvallac CVP;
16. Thixotropic agent e: a sorbitol-based thixotropic agent, tribenzylidene sorbitol;
17. Metal powder i: a tin-silver-copper alloy, in which a weight ratio of the tin, silver and copper is 96.5: 3:0.5; the product model: SAC305; melting point: 220°C; average particle size: from 25 µm to 45 µm; and
18. Metal powder ii: a lead-tin-silver alloy, in which a weight ratio of the lead, tin and silver is 92.5: 5: 2.5; melting point: 296°C; average particle size: from 25 µm to 45 µm.

### Solder paste compositions

First, according to the content ratios shown in Table 1-1 (unit: parts by weight), the Organic mixture 1 to Organic mixture 20 were prepared by the following steps.

A solvent and a thixotropic agent were added to a reactor tank to form a mixed solution. Then, the mixed solution was heated to 50°C to 80°C and stirred well. After that, an appropriate amount of the organic acid was added into the reactor tank and stirred continuously to mix well. Finally, the organic mixture (*i.e.* each of Organic mixtures 1 to 20) was obtained. Each organic mixture includes the solvent in an amount of 100 parts by weight, the organic acid in an amount of 0.01 parts by weight to 3 parts by weight relative to the weight of the solvent, and the thixotropic agent in an amount of 1 to 3 parts by weight relative to the weight of the solvent.

Second, according to the content ratios shown in Table 1-2, a metal powder was slowly added into the organic mixture and stirred to make the metal powder and the organic mixture mix well, so as to obtain a premix. After that, the premix was filled into a plastic syringe to perform a vacuum degassing step. Finally, the solder paste composition (*i.e.* each of Solder paste compositions E1 to E20) was obtained.

Take Solder paste composition E1 as an example of Solder paste compositions E1 to E20.

First, 100 parts by weight of the Solvent A and 1 part by weight of the Thixotropic agent a were added to a reactor tank to form a mixed solution 1. Then, the mixed solution 1 was heated to 50°C and stirred well. After that, 0.01 parts by weight of the Organic acid I was added into the reactor tank and stirred continuously to mix well. Finally, the Organic mixture 1 was obtained.

Next, 7 parts by weight of the Organic mixture 1 relative to 100 parts by weight of the Metal powder i was taken, and then Metal powder i was slowly added into said Organic mixture 1 and stirred to make the Metal powder i and the Organic mixture 1 mix well, so as to obtain a premix 1. After that, the premix 1 was filled into a plastic syringe to perform a vacuum degassing step. Finally, the Solder paste composition E1 was obtained.

The Solder paste compositions E2 to E20 of Examples E2 to E20 were prepared according to the content ratios shown in Table 1-2 and the same preparing procedure as in the preparation of Solder paste composition E1. The main difference between Solder paste compositions E1 to E20 was the components contained therein and their weight ratios.

Comparative Examples 1 to 3 were used as cross reference to Examples 1 to 20. Comparative Examples 1 to 3 were prepared by the same preparing procedure as in the preparation of Solder paste compositions E1 to E20. The main difference was that the Organic mixtures 21 to 23 respectively contained in Comparative Examples 1 to 3 did not contain any organic acid.

Specifically, according to the content ratios shown in Table 1-1, the Organic mixture 21 to Organic mixture 23 were prepared by the following steps.

A solvent and a thixotropic agent were added to a reactor tank to form a mixed solution. Then, the mixed solution was heated to 50°C to 80°C and stirred well, so as to obtain the organic mixture (*i.e.* each of Organic mixtures 21 to 23). Wherein, each organic mixture includes the solvent in an amount of 100 parts by weight and the thixotropic agent in an amount of 1 to 2 parts by weight relative to the weight of the solvent.

Second, according to the content ratios shown in Table 1-2, a metal powder was slowly added into the organic mixture and stirred to make the metal powder and the organic mixture mix well, so as to obtain a premix. After that, the premix was filled into a plastic syringe to perform a vacuum degassing step. Finally, the solder paste composition (*i.e.* each of Solder paste compositions C1 to C3) was obtained.

**Table 1-1: Components and the contents thereof of Organic mixtures 1 to 23 (Unit: parts by weight)**

| Organic mixture | Solvent | | Organic acid | | Thixotropicagent | |
|---|---|---|---|---|---|---|
| No. | Kind | Content | Kind | Content | Kind | Content |
| 1 | A | 100 | I | 0.01 | a | 1 |
| 2 | B | 100 | II | 0.05 | b | 2 |
| 3 | C | 100 | II | 0.1 | c | 3 |
| 4 | D | 100 | II | 0.1 | d | 2 |
| 5 | E | 100 | III | 0.1 | e | 2 |
| 6 | F | 100 | IV | 0.1 | b | 2 |
| 7 | B | 100 | I | 0.1 | a | 1 |
| 8 | B | 100 | II | 0.1 | a | 1 |
| 9 | B | 100 | III | 0.1 | a | 1 |
| 10 | B | 100 | IV | 0.1 | a | 1 |
| 11 | B | 100 | II | 0.01 | a | 1 |
| 12 | B | 100 | II | 0.05 | a | 1 |
| 13 | B | 100 | II | 0.2 | a | 1 |
| 14 | C | 100 | II | 0.1 | a | 1 |
| 15 | D | 100 | II | 0.1 | a | 1 |
| 16 | A | 100 | II | 0.1 | a | 1 |
| 17 | E | 100 | II | 0.1 | a | 1 |
| 18 | C | 100 | V | 0.5 | a | 2 |
| 19 | B | 100 | I | 1 | a | 1 |
| 20 | B | 100 | I | 3 | a | 1 |
| 21 | B | 100 | - | - | a | 1 |
| 22 | A | 100 | - | - | a | 1 |
| 23 | D | 100 | - | - | b | 2 |

**Table 1-2: Components and the contents thereof of Solder paste compositions E1 to E20 and C1 to C3**

| Solder paste composition | Metal powder | | Organic mixture | | Organic acid |
|---|---|---|---|---|---|
| No. | Kind | Content (parts by weight) | No. | Content (parts by weight) | Content (ppm) |
| E1 | i | 100 | 1 | 7 | 6.5 |
| E2 | ii | 100 | 2 | 12 | 52.5 |
| E3 | ii | 100 | 3 | 8 | 71.8 |
| E4 | ii | 100 | 4 | 8 | 72.6 |
| E5 | ii | 100 | 5 | 8 | 72.6 |
| E6 | ii | 100 | 6 | 8 | 72.6 |
| E7 | i | 100 | 7 | 7 | 64.7 |
| E8 | i | 100 | 8 | 7 | 64.7 |
| E9 | i | 100 | 9 | 7 | 64.7 |
| E10 | i | 100 | 10 | 7 | 64.7 |
| E11 | i | 100 | 11 | 7 | 6.5 |
| E12 | i | 100 | 12 | 7 | 32.4 |
| E13 | i | 100 | 13 | 7 | 129.3 |
| E14 | i | 100 | 14 | 7 | 64.7 |
| E15 | i | 100 | 15 | 7 | 64.7 |
| E16 | ii | 100 | 16 | 7 | 64.7 |
| E17 | ii | 100 | 17 | 7 | 64.7 |
| E18 | ii | 100 | 18 | 8 | 361.3 |
| E19 | i | 100 | 19 | 7 | 650 |
| E20 | i | 100 | 20 | 7 | 1900 |
| C1 | i | 100 | 21 | 7 | 0 |
| C2 | ii | 100 | 22 | 8 | 0 |
| C3 | ii | 100 | 23 | 8 | 0 |

### Soldering methods

### Preparation of test samples:

A copper substrate was prepared, wherein the copper substrate had a length of 30 mm, a width of 30 mm and a thickness of 300 µm. Next, the solder paste compositions E1 to E20 and C1 to C3 were respectively applied onto the surface of the copper substrate by dispensing to form a solder paste layer which had a length of 2 mm, a width of 2 mm and a thickness of 100 µm to 200 µm. Then, upper covers (*i.e.* soldering target) were respectively placed on the solder paste layers to obtain test samples E1-1 to E20-1 and C1-1 and C3-1. For an appearance analysis, the upper covers were glass sheets, each having a length of 8 mm, a width of 8 mm and a thickness of 150 µm. For a porosity analysis, the upper covers were wafers, each having a length of 1.7 mm, a width of 1.7 mm and a thickness of 150 µm. For a thrust test, the upper covers were wafers, each having a length of 2.4 mm, a width of 2.4 mm and a thickness of 200 µm.

Each of the test samples was sequentially transported to a double-chamber acid reflow oven to undergo a soldering process, so as to obtain the soldered products P1 to P24 and CP1 and CP6. Each of the test samples were processed at temperatures within Temperature Profile Range (I) shown in Table 2-1 or Temperature Profile Range (II) shown in Table 2-2 in the soldering process, depending on the kind of the metal powder of the solder paste composition contained therein. When the solder paste composition contained Metal powder i, the soldering condition of Temperature Profile Range (I) would be selected, while when the solder paste composition contained Metal powder ii, the soldering condition of Temperature Profile Range (II) would be selected. In addition, in the Temperature Profile Range (I) and the Temperature Profile Range (II), all of the stages respectively had an atmosphere of 101.3 Pa of nitrogen gas and 100 ppm or less of oxygen gas except for the fifth stage (*i.e.* the first step of introducing the acid gas) and the seventh stage (*i.e.* the second step of introducing the acid gas). The test samples stood in each stage of the Temperature Profile Range (I) and the Temperature Profile Range (II) for 45 seconds.

When the test samples were moved to the chamber having the acid gas (i.e. the fifth and seventh stages), said chamber was closed and then subjected to an evacuation step to remove the nitrogen gas in said chamber until the pressure reached less than 133 Pa.

The solder paste compositions and the acid gases used in the soldering methods for producing soldered products P1 to P24 and CP1 and CP6 were listed in Tables 3-1 and 3-2. The pressures of the acid gas in the chamber were also listed in Tables 3-1 and 3-2. Moreover, in the same Example of the soldering method, the acid gas in the first step of introducing the acid gas was the same as the acid gas in the second step of introducing the acid gas.

**Table 2-1: No. and temperatures of each stage in Temperature Profile Range (I)**

| Temperature Profile Range (I) | Preliminary Heating Step: Five-Stage Heating Step | | | | | |
|---|---|---|---|---|---|---|
| Stage No. | 1 | 2 | 3 | 4 | 5(with acid) | |
| Temperature | 100°C | 140°C | 160°C | 180°C | 200°C | |

| | Melting Step | | Cooling Step | | | |
|---|---|---|---|---|---|---|
| Stage No. | 6 | 7(with acid) | 8 | 9 | 10 | 11 |
| Temperature | 240°C | 260°C | 150°C | 20°C | 20°C | 20°C |

**Table 2-2: No. and temperatures of each stage in Temperature Profile Range (II)**

| Temperature Profile Range (II) | Preliminary Heating Step: Five-Stage Heating Step | | | | | |
|---|---|---|---|---|---|---|
| Stage No. | 1 | 2 | 3 | 4 | 5(with acid) | |
| Temperature | 100°C | 160°C | 200°C | 230°C | 285°C | |

| | Melting Step | | Cooling Step | | | |
|---|---|---|---|---|---|---|
| Stage No. | 6 | 7(with acid) | 8 | 9 | 10 | 11 |
| Temperature | 340°C | 360°C | 200°C | 20°C | 20°C | 20°C |

### Analysis for the characteristics of the soldered products:

Soldered products P1 to P24 and CP1 and CP6 prepared from the corresponding solder paste compositions and the corresponding soldering methods were analyzed on their appearances, porosities and soldering strengths, and the results of the soldered products P1 to P21 and CP1 and CP6 were listed in Table 3-1 and the results of the soldered products P9 and P22 to P24 were listed in Table 3-2.

In order to ensure the experimental significance of the characteristic analysis, soldered products P1 to P24 and CP1 and CP6 were each respectively analyzed by the same test method. Therefore, it can be understood that the difference in characteristics of each of the soldered products P1 to P24 and CP1 and CP6 was mainly caused by the difference in the composition of each of the solder paste compositions and/or the kinds of the acid gas and the pressure thereof.

### Test Method:

1. Appearance: Each of the soldered products was observed for the melting condition by an optical microscope with a magnification of 50 times, and the results were listed in Tables 3-1 and 3-2. In the case that the melting area of the solder joint of the soldered product was greater than 90%, the result was recorded as "○." In the case that the melting area of the solder joint of the soldered product was equal to or larger than 30% and smaller than 90%, the result was recorded as "Δ." In the case that the melting area of the solder joint of the soldered product was smaller than 30%, the result was recorded as "X." Furthermore, in the case that the melting area of the solder joint of the soldered product was greater than 90%, the solder joint of the soldered product was further observed whether there were any obvious voids in said solder joint, and the results were listed in Tables 3-1 and 3-2.
2. Porosity: Each of the soldered products was photographed from directly above by an X-ray spectrometer. If there were any voids in the solder joint, the area of the voids in the photo would appear fluorescent; then, an area ratio of all the holes in each test sample relative to the total area of the wafer was analyzed by the X-ray built-in software, so as to obtain the porosity of each soldered product.
3. Thrust test: Each of the soldered products was measured by a digital force gauge (Manufactured by YOTEC Instrument Co., Ltd. Product Model: SH-200). According to the standard method JIS Z 3198-7, the contact position between the shear jig and the solder joint is where the thickness of the solder joint reaches 1/3 (based on the interface between the solder paste and the copper substrate); next, a horizontal thrust was applied to the solder joint, and the maximum thrust that the solder joint could withstand was recorded as the soldering strength of each of the soldered products. In the case that the maximum thrust that the solder joint of the soldered product could withstand was larger than 20 kg force (kgf; 1 kgf is equal to 9.8 N), the result of the soldering strength was evaluated as "excellent." In the case that the maximum thrust that the solder joint of the soldered product could withstand was equal to or larger than 12 kgf and smaller than 20 kgf, the result of the soldering strength was evaluated as "good." In the case that the maximum thrust that the solder joint of the soldered product could withstand was smaller than 12 kgf, the result of the soldering strength was evaluated as "poor."

**Table 3-1: No. of the solder paste compositions, kinds of the acid gas and the pressure thereof used for the solder products P1 to P21 and CP1 to CP6 and the characteristics of the solder products P1 to P21 and CP1 to CP6**

| Soldered product | Solder paste composition | Acid gas | | Appearance | | Porosity | Thrust |
|---|---|---|---|---|---|---|---|
| No. | No. | Kind | Pressure (Pa) | Melting condition | With/ no voids | (%) | (kgf) |
| P1 | E1 | Formic acid | 5300 | ○ | With voids | 3.66 | 13.7 |
| P2 | E2 | Acetic acid | 5300 | ○ | NO | 0.04 | >20 |
| P3 | E3 | Propanoic acid | 5300 | ○ | NO | 0.25 | >20 |
| P4 | E4 | Butyric acid | 5300 | ○ | NO | 0.48 | >20 |
| P5 | E5 | Acetic acid | 5300 | ○ | NO | 0.25 | >20 |
| P6 | E6 | Acetic acid | 5300 | ○ | NO | 0.07 | >20 |
| P7 | E3 | HCl | 5300 | ○ | NO | 0.66 | >20 |
| P8 | E7 | Acetic acid | 5300 | ○ | NO | 0.34 | >20 |
| P9 | E8 | Acetic acid | 5300 | ○ | NO | 0.41 | >20 |
| P10 | E9 | Acetic acid | 5300 | ○ | NO | 0.38 | >20 |
| P11 | E10 | Acetic acid | 5300 | ○ | NO | 0.22 | >20 |
| P12 | E11 | Acetic acid | 5300 | ○ | NO | 2.85 | 14.2 |
| P13 | E12 | Acetic acid | 5300 | ○ | NO | 0.12 | >20 |
| P14 | E13 | Acetic acid | 5300 | ○ | NO | 0.31 | >20 |
| P15 | E14 | Acetic acid | 5300 | ○ | NO | 0.33 | >20 |
| P16 | E15 | Acetic acid | 5300 | ○ | NO | 0.36 | >20 |
| P17 | E16 | Acetic acid | 5300 | ○ | NO | 0.46 | >20 |
| P18 | E17 | Acetic acid | 5300 | ○ | NO | 0.29 | >20 |
| P19 | E18 | Acetic acid | 5300 | ○ | NO | 0.64 | >20 |
| P20 | E19 | Acetic acid | 5300 | ○ | NO | 0.55 | >20 |
| P21 | E20 | Acetic acid | 5300 | ○ | NO | 0.47 | >20 |
| CP1 | C1 | Acetic acid | 5300 | Δ | -- | 36 | 3.2 |
| CP2 | C2 | Acetic acid | 5300 | Δ | -- | 26 | 5.4 |
| CP3 | C3 | Acetic acid | 5300 | Δ | -- | 30 | 5.1 |
| CP4 | C2 | X | 0 | X | -- | >80 | <0.1 |
| CP5 | C3 | X | 0 | X | -- | >80 | <0.1 |
| CP6 | E18 | X | 0 | X | -- | >80 | <0.1 |

**Table 3-2: No. of the solder paste compositions, kinds of the acid gas and the pressure thereof used for the solder products P9 and P22 to P24 and the characteristics of the solder products P9 and P22 to P24**

| Soldered product | Solder paste composition | Acid gas | | Appearance | | Porosity | Thrust |
|---|---|---|---|---|---|---|---|
| No. | No. | Kind | Pressure (Pa) | Melting condition | With/ no voids | (%) | (kgf) |
| P22 | E8 | Acetic acid | 1333 | ○ | NO | 0.36 | >20 |
| P23 | E8 | Acetic acid | 2000 | ○ | NO | 0.41 | >20 |
| P24 | E8 | Acetic acid | 2666 | ○ | NO | 0.47 | >20 |
| P9 | E8 | Acetic acid | 5300 | ○ | NO | 0.41 | >20 |

### Discussion of the results:

According to the results of the appearance analysis shown in Table 3-1, because soldered products P1 to P21 were prepared from the solder paste compositions E1 to E20 including a specific organic acid and were produced by the soldering method including the step of introducing the acid gas, the organic acid can be uniformly penetrated into every part of the solder joint. Therefore, the metal oxide film on the metal powder was comprehensively destroyed, the melting condition for the solder joint was good, and the melting area of the whole solder joint could be as high as nearly 100%.

In contrast, soldered products CP1 to CP3 were prepared from the solder paste compositions C1 to C3 without a specific organic acid, so even if the same amount of acid gas was introduced and supplied during the soldering process, the solder joints could not be completely melted. Besides, taking soldered product 6 for example, in the case that the solder paste composition contained an organic acid but the soldering process did not include the step of introducing the acid gas, the resulting soldering joint still could not be completely melted.

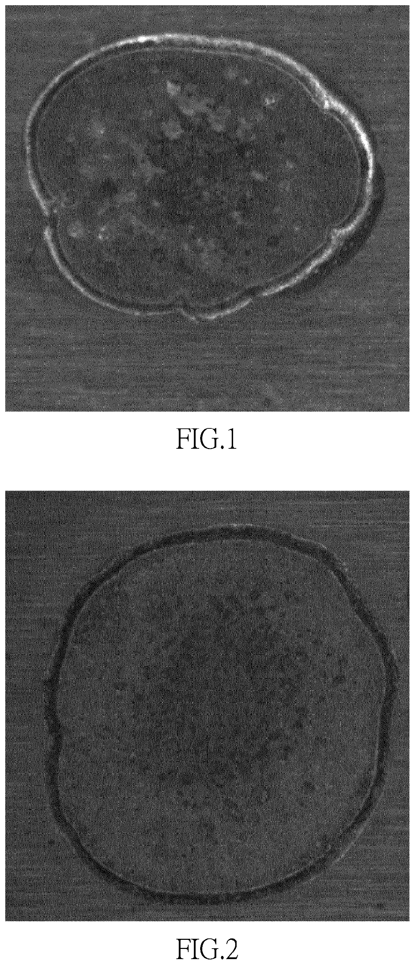

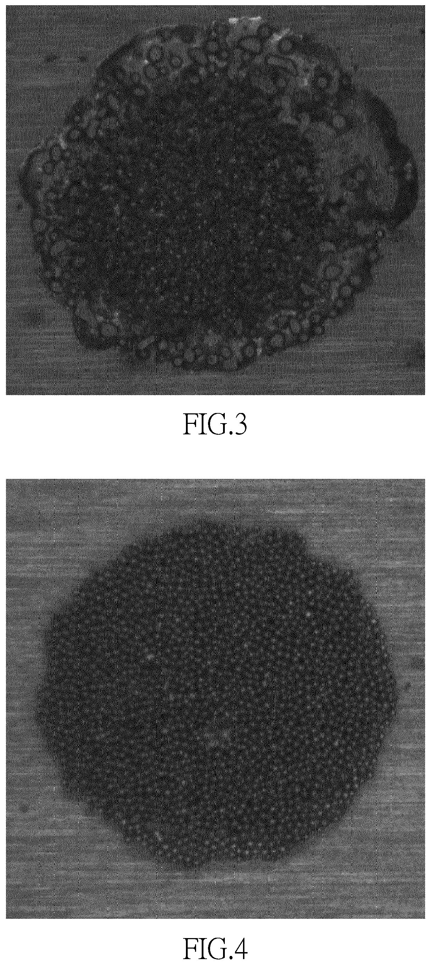

Take soldered products P1, P2, CP2 and CP4 for example. With reference to Figs. 1 to 4, the surface of the soldered product P1 in Fig. 1 and the surface of the soldered product P2 in Fig. 2 were substantially even and flat; especially the soldered product P2 was almost without voids (*i.e.* obvious white points). In contrast, the surface of the soldered product CP2 in Fig. 3 and the surface of the soldered product CP4 in Fig. 4 were quite uneven and full of voids. Accordingly, it can demonstrate that the solder paste composition of the present invention can use a common and commercial metal powder which does not need to undergo a pretreatment in advance, and the resulting solder joint can still be almost completely melted.

In addition, according to the results of the porosity analysis and the thrust test shown in Table 3-1, all of the soldered products P1 to P21 respectively had a porosity less than 4%; moreover, all of the maximum thrusts that the solder joints of the soldered products P1 to P21 could withstand were larger than 12 kgf. Compared with the conventional soldering method, the porosity of the resulting solder joint can only be reduced to 2% at best, and the soldered products P2 to P11 and P13 to P21 could even had a porosity less than 1%. Accordingly, it can demonstrate that the soldering method of the present invention which uses the solder paste composition of the present invention can make the resulting solder joint melt completely even if the solder paste composition does not comprise the rosin and the quaternary ammonium halide salt. In addition, the soldering method of the present invention also can avoid generating flux residues from the rosin and the quaternary ammonium halide salt, thereby reducing the solder porosity and improving the soldering strength of the solder joint.

Moreover, from the results of the soldered products P2 and P27, it can be understood that both an organic acid and an inorganic acid can be applied to the step of introducing the acid gas in the soldering method of the present invention, and both of the resulting solder joints will respectively have low porosity and high soldering strength.

Further, from the results of the soldered products P8 to P11 shown in Table 3-1, it can be seen that when the solder paste compositions respectively comprise an acid such as the formic acid, the acetic acid, the propanoic acid or the butyric acid in a same amount, all of them can have advantages such as low porosity and high soldering strength.

From the results of Tables 2-1 and 3-1, when the organic acid in the solder paste composition was greater than 0.01 parts by weight (relative to 100 parts by weight of the solvent), for example, the resulting solder products P2 to P11 and P13 to P21 could respectively form a solder joint with a porosity of less than 1% and could respectively withstand a thrust of more than 20 kgf.

Furthermore, from the results in Table 3-2, when the pressure of the acid gas in the chamber was 1300 Pa or more, the resulting solder joint could have a porosity of less than 1% and also could withstand a thrust of more than 20 kgf.

Based on the results, it demonstrates that since the solder paste composition of the present invention has a specific organic acid with a low boiling point, the organic acid can completely and fully destroy the metal oxide film on the surface of the metal powder, thereby avoiding an uneven soldering strength; besides, the organic acid can be completely vaporized without remaining in the resulting solder joint, so the resulting solder joint can avoid being corroded and obtain low porosity and an improved soldering strength. In addition, since the soldering method of the present invention uses the solder paste composition of the present invention, it can omit a cleaning step after the soldering process so as to simplify the overall manufacturing process, and then a reduction of waste water generated from the cleaning step can be achieved. Thus, the soldering method can meet environmental requirements and reduce the cost of manufacturing printed circuit boards, thereby increasing the application values.

## Claims

1. A solder paste composition, **characterized in that** the solder paste composition comprises:
a metal powder in an amount of 100 parts by weight and an organic mixture in an amount from 3 parts by weight to 18 parts by weight;
wherein the organic mixture comprises a solvent, a thixotropic agent and an organic acid; wherein the organic acid has a boiling point lower than a melting point of the metal powder.

2. The solder paste composition as claimed in claim 1, wherein provided that the solvent is in an amount of 100 parts by weight, the organic acid is in an amount from 0.005 parts by weight to 3 parts by weight.

3. The solder paste composition as claimed in claim 1 or 2, wherein the organic acid has a pKa value ranging from 1.0 to 6.5.

4. The solder paste composition as claimed in any one of claims 1 to 3, wherein the organic acid comprises a formic acid, an acetic acid, a propanoic acid, a butyric acid or an oxalic acid.

5. The solder paste composition as claimed in any one of claims 1 to 4, wherein the metal powder comprises tin; a content of the tin ranges from 4.5 wt% to 96 wt% based on a total weight of the metal powder.

6. The solder paste composition as claimed in any one of claims 1 to 5, wherein the solvent comprises an alcohol solvent, an ether solvent or a glycol ether solvent.

7. The solder paste composition as claimed in any one of claims 1 to 6, wherein the thixotropic agent comprises an amide-based thixotropic agent, a hydrogenated castor oil-based thixotropic agent, a castor oil-based thixotropic agent or a sorbitol-based thixotropic agent; provided that the solvent is in an amount of 100 parts by weight, the thixotropic agent is in an amount from 0.5 parts by weight to 5 parts by weight.

8. A soldering method, **characterized in that** the soldering method comprises steps as follows:
a provision step of providing a soldering paste composition between a substrate and a soldering target to form a complex structure, wherein the soldering paste composition is the soldering paste composition as claimed in any one of claims 1 to 7;
placing the complex structure in a chamber and introducing an acid gas to the chamber; and
melting the metal powder of the soldering paste composition to solder the soldering target to the substrate.

9. The soldering method as claimed in claim 8, wherein a pressure of the acid gas in the chamber ranges from 700 Pa to 80,000 Pa.

10. The soldering method as claimed in claim 9, wherein the acid gas comprises a gaseous formic acid, a gaseous acetic acid, a gaseous propanoic acid, a gaseous butyric acid or hydrogen chloride.

11. The soldering method as claimed in any one of claims 8 to 10, wherein the soldering method further comprises a preliminary heating step after the provision step, wherein a temperature of the preliminary heating step is lower than the melting point of the metal powder.

12. The soldering method as claimed in any one of claims 8 to 11, wherein a temperature of the chamber ranges from 200°C to 380°C.
